# EUROPEAN PATENT APPLICATION

(11) **EP 4 485 375 A1**
(43) Date of publication of application: **01.01.2025**
(21) Application number: 24177642.6
(22) Date of filing: 23.05.2024
(51) Int. Cl.: G06V 10/764, G06Q 10/0639, G06V 20/40, G06V 20/52, G06V 20/70, G06V 40/10, G06V 40/20, G06V 10/80

(54) **INFORMATION PROCESSING PROGRAM, INFORMATION PROCESSING METHOD, AND INFORMATION PROCESSING APPARATUS**

(30) Priority: 26.06.2023 JP 2023104499
(71) Applicant: FUJITSU LIMITED, Kawasaki-shi, Kanagawa 211-8588 (JP)
(72) Inventor: Fujimoto, Junya, Kawasaki-shi, Kanagawa, 211-8588 (JP)
(74) Representative: Hoffmann Eitle

(57) **Abstract**

An information processing program including instructions for causing a computer to execute processing including: acquiring a video data including frames each of which is associated with a time point and includes the video captured at the time point, by capturing a video at a site in which a person and an object exist; identifying a first relation by analyzing a first frame associated with a first time point, the first relation identifying an interaction between the object and the person in the first frame; identifying a second relation by analyzing a second frame associated with a second time point, the second relation identifying an interaction between the object and the person in the second frame; and specifying, based on the first and second relations, an action of the person on the object in a third frame associated with a third time point between the first and second time points.

## Description

### FIELD

The embodiment discussed herein is related to an information processing program, and the like.

### BACKGROUND

When a worker performs work in a factory, a quality defect may occur in a product due to an error in a work content of the worker. To solve such a problem, there is a related art in which whether a work content of a worker is appropriate is determined based on a video captured by a camera in a factory, and when it is determined that the work content is not appropriate, an alert is notified to the worker.

For example, in the related art described above, a series of actions of the worker on an object is specified by analyzing the video captured by the camera in the factory, and it is determined that an error has occurred in the work content in a case where the specified series of actions is different from an action procedure set in advance.

Japanese Laid-open Patent Publication No. 2022-82277 is disclosed as related art.

### SUMMARY

### TECHNICAL PROBLEM

However, in the related art described above, there is a problem that it is not possible to accurately determine whether the work content of the worker is appropriate.

For example, in the related art, when the worker turns his/her back with respect to the camera, it is impossible to specify the action of the worker in a period during which the worker turns his/her back, and it is difficult to determine whether an error has occurred in the work content.

Such a problem is not limited to the work content of the worker in the factory, and may also occur in a case where it is determined, in relation to a series of actions performed by a certain person on a certain object, whether such a series of actions is appropriate.

According to one aspect, it is an object to provide a computer-readable recording medium storing an information processing program, an information processing method, and an information processing apparatus capable of determining whether a series of actions performed by a person on an object is appropriate.

### SOLUTION TO PROBLEM

According to an aspect of the embodiments, there is provided an information processing program including instructions which, when executed by a computer to execute processing including: acquiring a video data obtained by causing a camera to capture a video at a site in which a person and an object exist, the video data including a plurality of frames each of which is associated with a corresponding time point and includes the video captured at the corresponding time point; identifying a first relation by analyzing a first frame that is any of the plurality of frames included in the acquired video data and that is associated with a first time point, the first relation being a relation identifying an interaction between the object and the person included in the first frame; identifying a second relation by analyzing a second frame that is any of the plurality of frames included in the acquired video data and that is associated with a second time point, the second relation being a relation identifying an interaction between the object and the person included in the second frame; and specifying, based on the first relation and the second relation, an action of the person on the object in a third frame, the third frame being a frame that is any of the plurality of frames and that is associated with a third time point between the first time point and the second time point.

### ADVANTAGEOUS EFFECTS OF INVENTION

It is possible to determine whether a series of actions performed by a person on an object is appropriate.

### BRIEF DESCRIPTION OF DRAWINGS

FIG. 1 is a diagram illustrating a configuration example of an information processing system according to the present embodiment;
FIG. 2 is a diagram for describing an example of processing of an information processing apparatus according to the present embodiment;
FIG. 3 is a functional block diagram illustrating a configuration of the information processing apparatus according to the present embodiment;
FIG. 4 is a diagram illustrating an example of information stored in a camera installation database (DB) according to the present embodiment;
FIG. 5 is a diagram illustrating an example of information stored in an action rule DB according to the present embodiment;
FIG. 6 is a diagram illustrating an example of information stored in a relation DB according to the present embodiment;
FIG. 7 is a diagram illustrating an example of a relation using a scene graph according to the present embodiment;
FIG. 8 is a diagram for describing a problem with scene graph generation;
FIG. 9 is a diagram illustrating an example of attention map generation according to the present embodiment;
FIG. 10 is a diagram illustrating an example of a neural network (NN) configuration for relation estimation according to the present embodiment;
FIG. 11 is a diagram illustrating an example of image feature extraction according to the present embodiment;
FIG. 12 is a diagram illustrating an example of object detection according to the present embodiment;
FIG. 13 is a diagram illustrating an example of pair feature quantity generation according to the present embodiment;
FIG. 14 is a diagram illustrating an example of relation feature extraction according to the present embodiment;
FIG. 15 is a diagram illustrating an example of relation estimation according to the present embodiment;
FIG. 16 is a diagram illustrating an example of relation specification by human object interaction detection (HOID) according to the present embodiment;
FIG. 17 is a flowchart illustrating a processing procedure of the information processing apparatus according to the present embodiment;
FIG. 18 is a diagram illustrating an example of a skeleton model of a human body;
FIG. 19 is a diagram illustrating examples of joint names; and
FIG. 20 is a diagram illustrating an example of a hardware configuration of a computer that realizes functions similar to those of the information processing apparatus according to the embodiment.

### DESCRIPTION OF EMBODIMENTS

Hereinafter, an embodiment of an information processing program, an information processing method, and an information processing apparatus disclosed herein will be described in detail based on the drawings. This disclosure is not limited by this embodiment.

### [Embodiment]

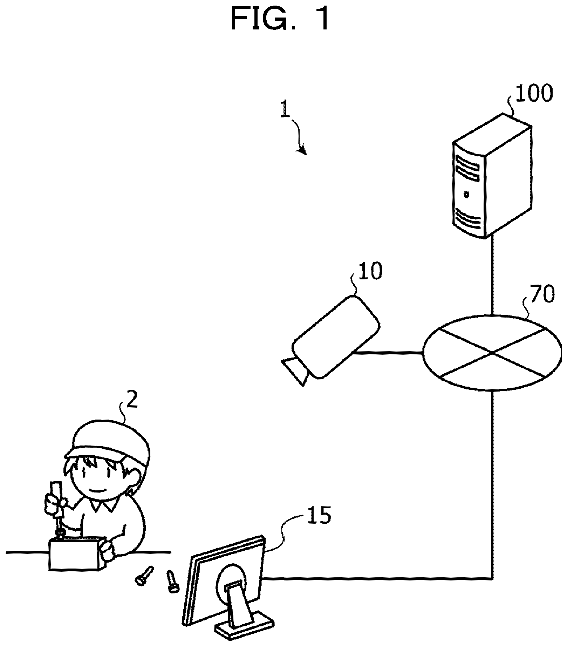

An information processing system according to the present embodiment will be described. FIG. 1 is a diagram illustrating a configuration example of the information processing system according to the present embodiment. As illustrated in FIG. 1, an information processing system 1 includes a camera 10, a terminal apparatus 15, and an information processing apparatus 100. The camera 10, the terminal apparatus 15, and the information processing apparatus 100 are communicably coupled to each other via a network 70.

As the network 70, various communication networks or the like such as an intranet and Internet used in various facilities such as a factory may be adopted regardless of wired or wireless. The network 70 may be configured by the intranet and the Internet via a network apparatus such as a gateway or another apparatus (not illustrated) instead of a single network. Expression "in a facility" is not limited to indoor and may include outdoor.

The camera 10 is a monitoring camera or the like installed in various facilities such as in a factory. For example, the camera 10 captures a video including a worker 2 working on an object in the factory. Data of the video captured by the camera 10 is transmitted to the information processing apparatus 100. In the following description, the data of the video is denoted by "video data". That is, the video data is generated by causing the camera 10 to capture a video at a site in which a person and an object exist. Although only one camera 10 is illustrated in FIG. 1, a plurality of cameras 10 may be installed at various locations in various facilities such as a factory. The camera 10 may capture video data of a worker other than the worker 2.

The video data includes a plurality of time-series image frames. Frame numbers are assigned to the image frames in ascending chronological order. One image frame includes a still image captured by the camera 10 at a certain timing. Time data may be assigned to each image frame. That is, each of the plurality of time-series image frames may be associated with a corresponding time point and may include a still image capture by the camera 10 at a corresponding time point.

The terminal apparatus 15 is a terminal apparatus used by the worker 2. The terminal apparatus 15 is a desktop personal computer (PC), a notebook PC, or the like. The terminal apparatus 15 displays various types of information received from the information processing apparatus 100.

The information processing apparatus 100 acquires video data from the camera 10, analyzes a plurality of image frames constituting the video data by using a known object detection technique, and specifies a relation that identifies an interaction between an object and the worker 2 included in the image frame. For example, the relation specified by the information processing apparatus 100 includes a relation in which the worker 2 approaches, views, touches, rides on, grasps, or the like an object. The relation may also include, having a product, having a screw, tightening a screw, having a product with a screw tightened, and the like. This relation corresponds to an action of a person (for example, the worker 2) on an object. In the following description, the relation is denoted by an action of a person on an object as appropriate.

At each time point, the information processing apparatus 100 repeats the processing of specifying the relation and registers a relationship between a time point and a relation in a storage unit. In the description of the present embodiment, in a case where a same relation is continuously specified from continuous image frames, a period of the frames in which the same relation is specified is processed as one time point.

For example, it is assumed that a relation "view" is continuously specified in image frames f₁ to fₙ, a relation "grasp" is continuously specified in image frames f_{n + 1} to fₘ, and a relation "touch" is continuously specified in image frames f_{m + 1} to fₗ. In this case, the information processing apparatus 100 sets a relation at a time point (1) as "view", a relation at a time point (2) next to the time point (1) as "grasp", and a relation at a time point (3) next to the time point (2) as "touch".

Based on the specified series of actions (relations) and an action rule DB, the information processing apparatus 100 determines whether a work content of the worker 2 is appropriate. An appropriate action procedure is registered in the action rule DB.

For example, it is assumed that an action at each time point specified by the information processing apparatus 100 is "action X1 --> action X2 --> action X3 --> action X4", and the action rule DB includes an action procedure "action X1 --> action X2 --> action X3 --> action X4". In this case, since the action procedure that matches the specified action at each time point is included in the action rule DB, the information processing apparatus 100 determines that the work content of the person included in the video data of the camera 10 is appropriate.

It is assumed that an action at each time point specified by the information processing apparatus 100 is "action X1 --> action X2 --> action XE → action X4", and the action rule DB does not include the corresponding action procedure. In this case, since the action procedure that matches the specified action at each time point is not included in the action rule DB, the information processing apparatus 100 determines that the work content of the person included in the video data of the camera 10 is not appropriate, and outputs and displays information indicating that there is an error in the work content on the terminal apparatus 15.

When the worker 2 is working on an object, the information processing apparatus 100 may not specify a relation (an action of a person on an object) at a time point when the worker 2 turns his/her back with respect to the camera 10. At a time point when a shielding object or the like exists between the worker 2 and the camera 10, the information processing apparatus 100 may not specify a relation. In the following description, a time point at which a relation may not be identified is denoted by a "third time point".

When the third time point occurs, the information processing apparatus 100 acquires, from the storage unit, information on a first relation specified at a time point (hereafter, referred to as a first time point) immediately before the third time point and a second relation specified at a time point (hereafter, referred to as a second time point) immediately after the third time point. Based on the first relation and the second relation, the information processing apparatus 100 specifies a relation (an action of a person on an object) at the third time point. Accordingly, the information processing apparatus 100 may compensate for the relation at the third time point, and may determine whether a work content of the worker 2 is appropriate.

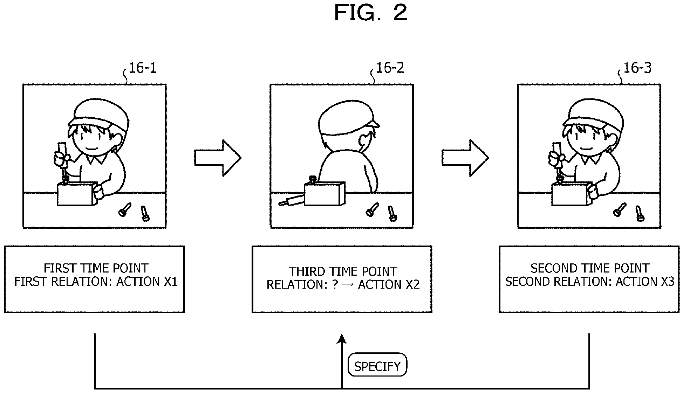

FIG. 2 is a diagram for describing an example of processing of the information processing apparatus according to the present embodiment. As illustrated in FIG. 2, the information processing apparatus 100 analyzes an image frame of video data 16-1 to specify a relation "action X1". The information processing apparatus 100 analyzes an image frame of video data 16-2 following the video data 16-1 but fails to specify a relation. As described above, the information processing apparatus 100 specifies the time point at which the specification of the relation fails, as the third time point. By analyzing an image frame of video data 16-3 following the video data 16-2, the information processing apparatus 100 specifies a relation "action X3".

In this case, the information processing apparatus 100 acquires the first relation "action X1" specified at the first time point immediately before the third time point and the second relation "action X3" specified at the second time point immediately after the third time point. Based on the first relation "action X1" and the second relation "action X3", the information processing apparatus 100 specifies a third relation "action X2".

For example, the information processing apparatus 100 may specify the third relation based on a trained first machine learning model. The first machine learning model is a neural network (NN) that uses the first relation and the second relation as input and the third relation as output.

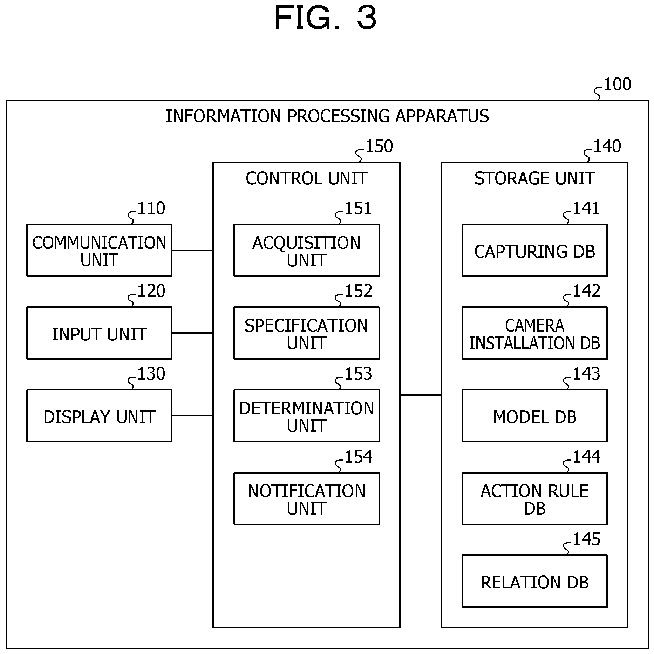

A configuration example of the information processing apparatus 100 will be described next. FIG. 3 is a functional block diagram illustrating the configuration of the information processing apparatus according to the present embodiment. As illustrated in FIG. 3, the information processing apparatus 100 includes a communication unit 110, an input unit 120, a display unit 130, a storage unit 140, and a control unit 150.

The communication unit 110 is a processing unit that controls communication with the camera 10, the terminal apparatus 15, and other apparatuses. Examples of the communication unit 110 include a communication interface such as a network interface card, or the like.

The input unit 120 inputs various types of information to the control unit 150 of the information processing apparatus 100. The input unit 120 is a keyboard, a mouse, a touch panel, or the like.

The display unit 130 displays information output from the control unit 150. The display unit 130 is a display, a touch panel, or the like.

The storage unit 140 has a function of storing various data and programs to be executed by a control unit 20. For example, the storage unit 140 is realized by a storage device such as a memory or a hard disk drive. The storage unit 140 stores a capturing DB 141, a camera installation DB 142, a model DB 143, an action rule DB 144, a relation DB 145, and the like. The DB is an abbreviation for database.

The capturing DB 141 stores video data imaged by the camera 10. The video data (time-series image frames) imaged by the camera 10 is transmitted from the camera 10 at any time, received by the information processing apparatus 100, and stored in the capturing DB 141.

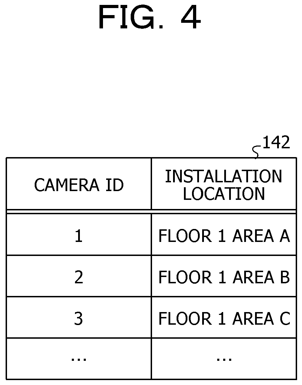

The camera installation DB 142 stores information for specifying a location where each of the cameras 10 is installed. The information stored in the camera installation DB 142 may be set in advance by an administrator or the like. FIG. 4 is a diagram illustrating an example of the information stored in the camera installation DB according to the present embodiment. As illustrated in FIG. 4, a camera ID and installation information are associated with each other in the camera installation DB 142. As the camera ID, information such as an identifier for uniquely identifying each of the cameras 10 is set. As the installation location, information for specifying a location where each of the cameras 10 is installed is set. In a case where only one camera 10 is installed or the like, the camera installation DB 142 may not be included in the storage unit 140.

The model DB 143 holds information related to a first machine learning model, a second machine learning model, and a third machine learning model.

The first machine learning model is a model that, when a first relation and a second relation are input, outputs information on a third relation. The first machine learning model is generated by machine learning using a relation at a first time point and a relation at a second time point as input data and using a relation at a third time point as a correct answer label.

The second machine learning model is a model that, when an image frame included in video data is input, outputs a region including an object and a person and a type of a relation between the object and the person. The second machine learning model is generated by machine learning using an image (image frame) as input data and a region including an object and a person and a type of a relation between the object and the person as a correct answer label. The type of the relation between the object and the person may be, but is not limited to, that the person approaches, touches, rides on, or the like the object. The region including the object or the person may be a bounding box (Bbox) that encloses regions of those in a rectangular shape in the image frame. The machine learning model for specifying a region including an object or a person and a relation between the object and the person from an image frame may be a machine learning model for human object interaction detection (HOID) that is an existing technique to be described later.

The second machine learning model is also used in a case where a scene graph to be described later is generated. For example, by inputting an image frame included in video data to the second machine learning model, a region including an object and a person and a type of a relation between the object and the person are specified, and a scene graph is generated based on the specified information. A type of the object for generating the scene graph may be referred to as a "class", and a relation between objects may be referred to as a "relation".

The third machine learning model is a model for generating an attention map to be described later. The third machine learning model is generated by training using a feature quantity of an object detected from an image (image frame) as input data and an important region in the image as a correct answer label.

The first machine learning model, the second machine learning model, and the third machine learning model described above may be generated by the information processing apparatus 100, or may be trained and generated by another information processing apparatus.

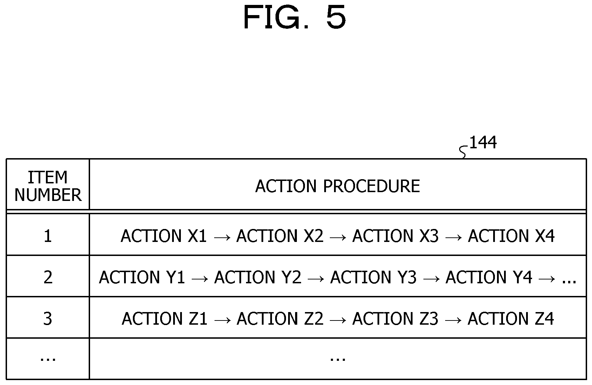

An appropriate action procedure is registered in the action rule DB 144. The information recorded in the action rule DB 144 may be set in advance by an administrator or the like. FIG. 5 is a diagram illustrating an example of the information stored in the action rule DB according to the present embodiment. As illustrated in FIG. 5, in the action rule DB 144, pieces of information such as "item number and action procedure" are stored in association with each other. The item number is a number for identifying a record of the action rule DB 144. The action procedure indicates an appropriate action procedure. For example, an action procedure corresponding to an item number "1" is "action X1 --> action X2 --> action X3 --> action X4".

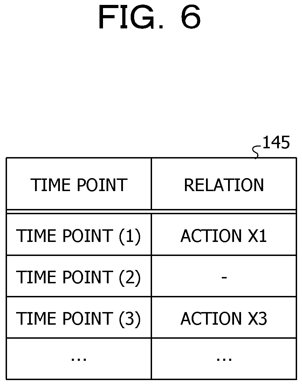

The relation DB 145 holds a relationship between a time point and a relation. FIG. 6 is a diagram illustrating an example of information stored in the relation DB according to the present embodiment. As illustrated in FIG. 6, this relation DB 145 associates a time point with a relation. Description about the time point and the relation is the same as the description about the time point and the relation described above. For example, a first row of the relation DB 145 indicates that a relation specified at a time point (1) is an "action X1". A second row indicates that a relation is "- (relation may not be specified)" at a time point (2).

The above-described information stored in the storage unit 140 is merely an example, and the storage unit 140 may store various types of information other than the above-described information.

Hereinafter, the control unit 150 in FIG. 3 will be described. The control unit 150 is a processing unit responsible for control of the entirety information processing apparatus 100. The control unit 150 includes an acquisition unit 151, a specification unit 152, a determination unit 153, and a notification unit 154. Each processing unit is an example of an electronic circuit included in a processor or a process executed by the processor.

The acquisition unit 151 acquires video data from the camera 10. The camera 10 stores the acquired video data in the capturing DB 141. The video data of the camera 10 is stored in the capturing DB 141 by the acquisition unit 151 at any time.

By analyzing the image frames constituting the video data stored in the capturing DB 141, the specification unit 152 identifies a relation at each time point, and registers information on the time point and the relation in the relation DB 145. In a case where a relation may not be specified at a certain time point, the specification unit 152 registers the certain time point and the relation "-" in the relation DB 145. An example of processing of the specification unit 152 will be described in more detail below. For example, the specification unit 152 specifies a relation between the person (worker 2) and the object by using any one of the scene graph, the attention map, and the HOID.

First, a case where the specification unit 152 specifies a relation between a person and an object by using a scene graph will be described.

The specification unit 152 analyzes video data (time-series image frames) and specifies a first region including an object included in the video data, a second region including a person included in the video data, and a relation that identifies an interaction between this object and this person.

The first region and the second region may be Bboxes. The specified relation may include a type of the relation in which a person approaches, touches, rides on, or the like an object. The processing of the specification unit 152 may include processing of, by inputting the video data (time-series image frames) to the second machine learning model, specifying the first region, the second region, and the relation for each person included in the video data, and generating a scene graph from the result of the specification.

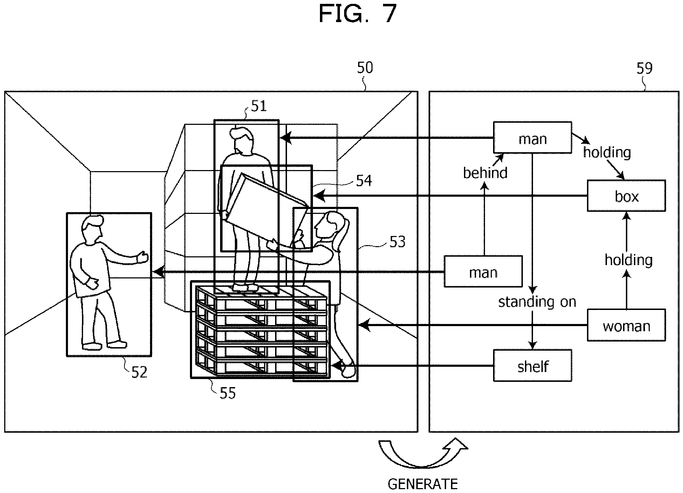

FIG. 7 is a diagram illustrating an example of a relation using a scene graph according to the present embodiment. By using an existing detection algorithm, the specification unit 152 detects objects including persons from an image frame 50, estimates relations between the objects, and generates a scene graph 59 expressing the objects and the relations between the objects, for example, a context. The existing detection algorithm is, for example, you only look once (YOLO), single shot multibox detector (SSD), region based convolutional neural networks (R-CNN), or the like. By inputting the image frame 50 to the second machine learning model, the specification unit 152 may also detect objects including persons from the image frame 50 by using the existing detection algorithm and estimate a relation between the objects.

In the example illustrated in FIG. 7, at least two men indicated by Bboxes 51 and 52, a woman indicated by a Bbox 53, a box indicated by a Bbox 54, and a shelf indicated by a Bbox 55 are detected from the image frame 50. The specification unit 152 cuts out a Bbox region of each object from the image frame 50, extracts a feature quantity of each region, estimates a relation between the objects from the feature quantities of a pair of objects (subject and object), and generates the scene graph 59.

The scene graph 59 in FIG. 7 indicates a relation in which the man indicated by the Bbox 51 is standing on the shelf indicated by the Bbox 55. The relation with respect to the man indicated by the Bbox 51 indicated by the scene graph 59 is not limited to one. As illustrated in FIG. 7, the scene graph 59 indicates all estimated relations such as being behind the man indicated by the Bbox 52 and holding the box indicated by the Bbox 54, in addition to the shelf. As described above, the specification unit 152 may specify the relation between the object and the person included in the video data by generating the scene graph.

For example, the specification unit 152 inputs image frames constituting video data to the second machine learning model to detect objects including persons, estimate a relations between the objects, and generate a scene graph. Such a scene graph includes, for each person, information on a first region of the person, a second region of the object, and a relation between the first region and the second region. The specification unit 152 analyzes the scene graph to specify a relation at each time point, and registers information on the time point and the relation in the relation DB 145.

The specification unit 152 may generate time-series scene graphs by executing the above-described processing on the time-series image frames, specify a first person whose relation on the object transitions from the first relation to the second relation from among a plurality of persons included in the video data by analyzing the scene graphs, and specify an action of the person on the object.

Because a problem also exists in the scene graph, by solving the problem, the specification unit 152 may specify a relation between an object and a person included in a video more accurately.

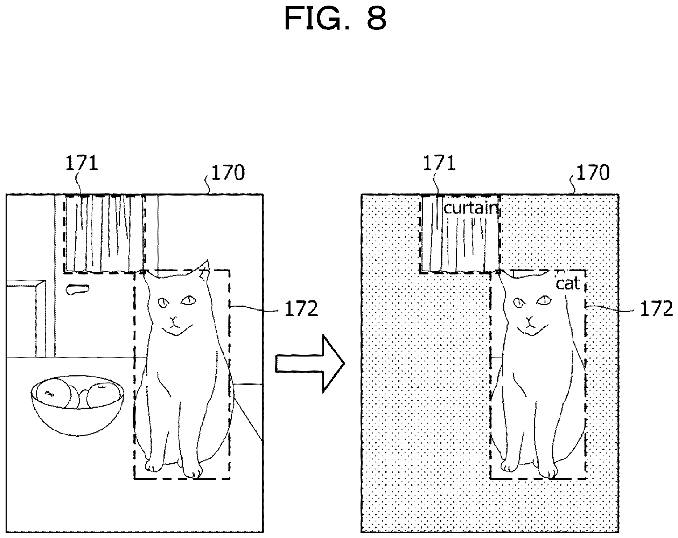

FIG. 8 is a diagram for describing the problem with the scene graph generation. Because individual objects are cut out from an image 170 (image frame) in the scene graph generation, contextually important information outside the region of a Bbox 171 of a subject and a Bbox 172 of an object may be overlooked. For example, as illustrated on the right side of FIG. 8, regions of the Bbox 171 of a curtain and the Bbox 172 of a cat are cut out, but information of regions other than these regions is not used when estimating a relation between the cat and the curtain. For this reason, even when there is important information at the time of estimating the relation between the cat and the curtain, the important information is overlooked. It may be estimated that the curtain is present behind the cat by looking objects around the cat and the curtain and the structure of the room. However, in normal scene graph generation, information on surroundings is not used to estimate the relation between the cat and the curtain. For this reason, when a relation between objects is estimated, it is possible to more accurately specify a relation by also using information on surroundings. In the example illustrated in FIG. 8, from the image 170, it is possible to estimate relations in which apples are present beside the cat, a table is likely to be present under the cat and the apples, the curtain is present behind the cat because the curtain is hung on a door, and the like.

For this reason, the specification unit 152 may adaptively extract a contextually important region from the entire image for each of the subject and the object for which a relation is to be estimated, and recognize the relation between the targets. Extraction of a region important for relation recognition is realized by, for example, generating a map (hereafter, referred to as an "attention map") having a value from 0 to 1 in accordance with the importance.

A case where the specification unit 152 specifies a relation between a person and an object by using the attention map will be described.

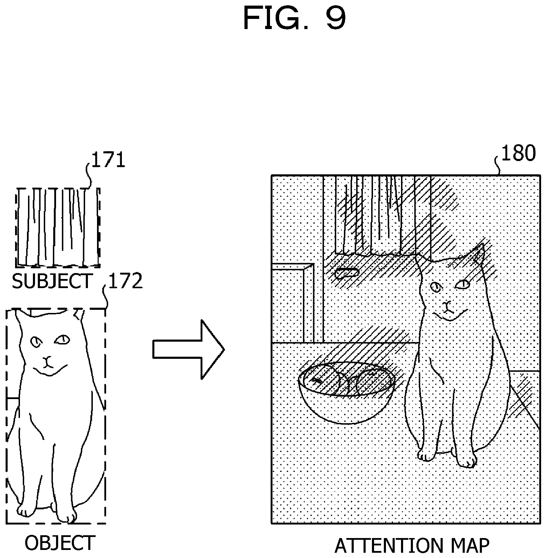

FIG. 9 is a diagram illustrating an example of attention map generation according to the present embodiment. As illustrated in FIG. 9, when estimating the relation between the curtain that is the subject and the cat that is the object, the specification unit 152 generates an attention map 180 expressing an important region other than the regions of the Bboxes 171 and 172, and uses the attention map for this estimation of the relation.

The attention map 180 is generated by using the third machine learning model generated by training using a feature quantity of an object detected from an image as input data and an important region in the image as a correct answer label so that a recognition rate of the relation between the objects is high. In the attention map 180, the importance of a region important for estimating the relation between the subject and the object is expressed by color, shading, or the like. Because it is not known in advance where a contextually important region is in the image, the specification unit 152 generates, for example, the attention map 180 for the entire image as a target. Accordingly, the specification unit 152 may more accurately extract the contextually important region, and may more accurately specify the relation between the objects.

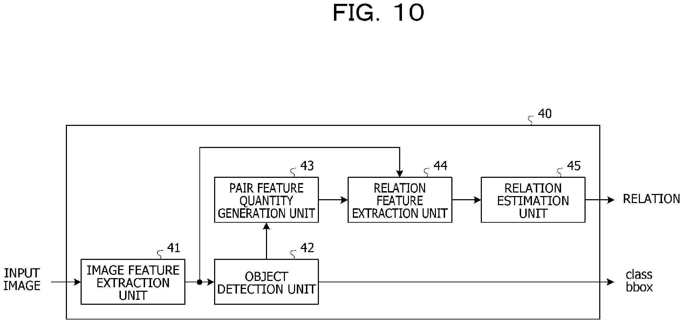

Estimation of the relation between the objects using the attention map 180 will be described in more detail with reference to FIGs. 10 to 15. The estimation of the relation between the objects using the attention map 180 may be performed using, for example, a neural network (NN).

FIG. 10 is a diagram illustrating an example of an NN configuration for relation estimation according to the present embodiment. As illustrated in FIG. 10, an NN 40 for estimating a relation between objects by using the attention map 180 includes an image feature extraction unit 41, an object detection unit 42, a pair feature quantity generation unit 43, a relation feature extraction unit 44, and a relation estimation unit 45. For example, the NN 40 is the third machine learning model.

When video data obtained by capturing a certain scene, for example, an image frame is input, the NN 40 executes processing by the image feature extraction unit 41, and outputs a Bbox of an object detected by the object detection unit 42 and a type (class) of this object. The NN 40 also outputs a relation between the objects having been detected by the object detection unit 42, which is estimated by the relation estimation unit 45. Processing performed by each of the processing units included in such an NN 40 will be described below on a processing-by-processing basis.

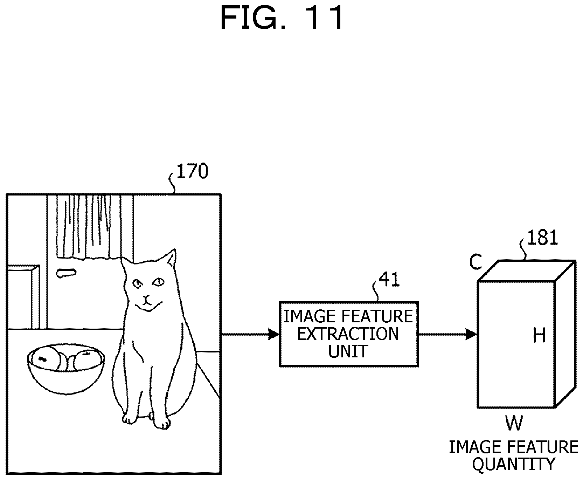

First, feature extraction from an image executed by the image feature extraction unit 41 will be described. FIG. 11 is a diagram illustrating an example of image feature extraction according to the present embodiment. As illustrated in FIG. 11, the image feature extraction unit 41 extracts an image feature quantity 181 of a C channel from the RGB 3-channel image 170. The image feature extraction unit 41 may be configured by using a convolutional neural network (CNN), a transformer, or the like which is an existing technique. The CNN or transformer pretrained for a classification task or the like with a large-scale image data set such as ImageNet may be used. A width W and a height H of the image feature quantity are usually smaller than a width and a height of an input image, for example, the image 170 in the example illustrated in FIG. 11 due to the CNN or pooling processing.

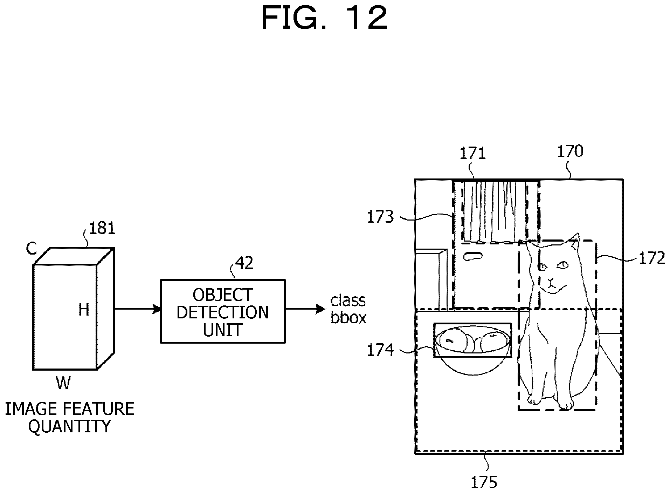

Next, object detection from the image feature quantity executed by the object detection unit 42 will be described. FIG. 12 is a diagram illustrating an example of the object detection according to the present embodiment. As illustrated in FIG. 12, the object detection unit 42 receives the image feature quantity 181 extracted by the image feature extraction unit 41, and outputs the Bboxes 171 to 175 of respective objects included in the image 170 and classes indicating types of the respective objects. In the example illustrated in FIG. 12, the Bboxes 171 to 175 are denoted by "bbox". As an output example, the object detection unit 42 may draw and output the Bboxes 171 to 174 of the respective detected objects to be superimposed on the image 170, for example, as illustrated on the right side of FIG. 12. A class indicating the type of each object, such as a curtain or a cat, may be output near each Bbox.

For example, a rectangle of the Bbox may be expressed by four real number values such as upper left coordinates (x1, y2) and lower right coordinates (x2, y2) of the rectangle. The class output from the object detection unit 42 is a probability value that an object detected in the Bbox is a detection target object determined in advance. For example, in a case where the detection target objects are {cat, table, car} (cat, table, and car), in the example of FIG. 12, the class of the Bbox 172 corresponding to the cat is probability values of being the respective detection target objects, such as (0.9, 0.1, 0.2). For example, the class in this case indicates that the probabilities of the detected object being a cat, a table, and a car are 0.9, 0.1, and 0.2, respectively. The object detection unit 42 may be configured by, for example, faster region based convolutional neural networks (R-CNN), mask R-CNN, a detection transformer (DETR), or the like which is an NN for object detection of the existing technique.

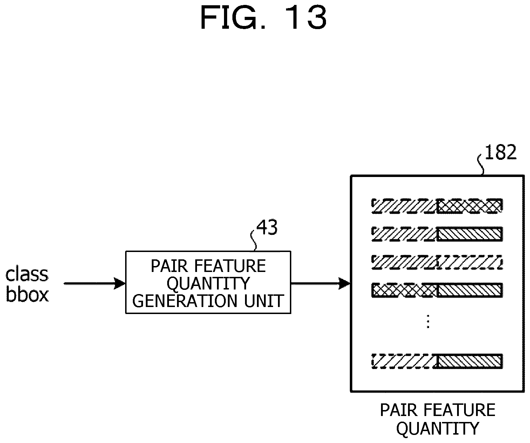

Next, generation of a feature quantity of a pair of the detected objects executed by the pair feature quantity generation unit 43 will be described. FIG. 13 is a diagram illustrating an example of pair feature quantity generation according to the present embodiment. As illustrated in FIG. 13, the pair feature quantity generation unit 43 extracts the feature quantity of each of the detected objects on an object-by-object basis, based on the objects detected by the object detection unit 42, for example, the class and the Bbox that are output. At this time, the pair feature quantity generation unit 43 may use RoIAlign in the Mask R-CNN, or the like. In a case where the object detection unit 42 is configured by the DETR, the feature quantity for each object output by the transformer decoder may be used as it is. The feature quantity to be extracted may be, for example, a real number vector of 256 dimensions or the like for each object.

The pair feature quantity generation unit 43 performs pairing on combinations of all the detected objects by assuming one of the objects as the subject and the other of the objects as the object. In pair feature quantities 182 illustrated on the right side of FIG. 13, feature quantities of the subjects and the objects are arranged on a pair-by-pair basis. To adjust the number of dimensions of the pair feature quantity 182, the pair feature quantity generation unit 43 may convert the feature quantities of the paired subject and object by using a multilayer-perceptron (MLP), which is an existing technique.

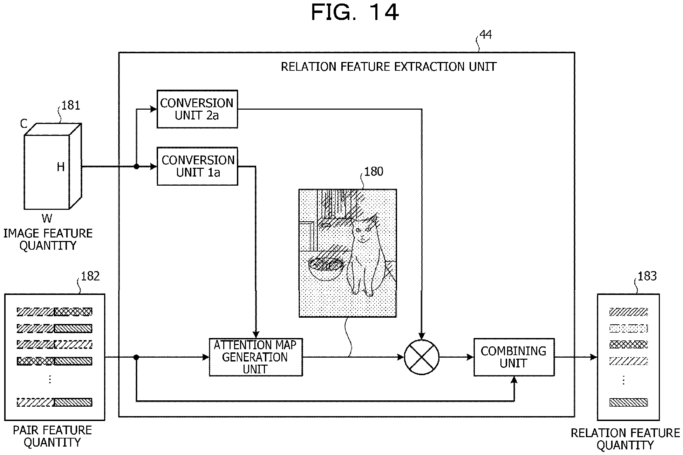

Next, extraction of the feature quantity indicating the relation between the detected and paired objects executed by the relation feature extraction unit 44 will be described. FIG. 14 is a diagram illustrating an example of relation feature extraction according to the present embodiment. As illustrated in FIG. 14, the relation feature extraction unit 44 includes, for example, a conversion unit 1a, a conversion unit 2a, an attention map generation unit, and a combining unit.

First, as illustrated in FIG. 14, to use the image feature quantity in the following processing, the relation feature extraction unit 44 converts, by using each of the conversion unit 1a and the conversion unit 2a, the image feature quantity 181 extracted by the image feature extraction unit 41. The conversion unit 1a and the conversion unit 2a may be realized by, for example, a multilayer-perceptron (MLP) or the like. In the example illustrated in FIG. 14, since the conversion unit 1a and the conversion unit 2a are realized by the MLPs having different weights, the conversion units 1a and 2a are distinguished from each other.

Next, the relation feature extraction unit 44 generates, with the attention map generation unit, the attention map 180 by obtaining a correlation between each row of the pair feature quantities 182 by the pair feature quantity generation unit 43 with the image feature quantity converted by the conversion unit 1a. Each row of the pair feature quantity 182 means that each pair of the subject and the object. After obtaining the correlation between the pair feature quantity 182 and the image feature quantity converted by the conversion unit 1a, the relation feature extraction unit 44 may convert the attention map 180 by the MLP or layer normalization.

The correlation processing between a certain single pair feature quantity 182 and the image feature quantity converted by the conversion unit 1a will be described more specifically. It is assumed that the pair feature quantity 182 is adjusted to a C-dimensional vector in the processing in the previous stage. It is also assumed that the image feature quantity converted by the conversion unit 1a is a tensor of H × W and a channel direction of which is C dimensions. It is also assumed that a certain pixel (x, y) of the image feature quantity converted by the conversion unit 1a is focused on, and this pixel is referred to as a pixel of interest. Since this pixel of interest is 1 × 1 × C, it may be regarded as a C-dimensional vector. The attention map generation unit calculates a correlation value (scalar) by obtaining a correlation between the C-dimensional vector of this pixel of interest and the pair feature quantity 182 adjusted to the C-dimensional vector. Thus, a correlation value at the pixel of interest (x, y) is determined. The attention map generation unit executes this processing for all the pixels to generate the attention map 180 of H × W × 1.

The relation feature extraction unit 44 multiplies the image feature quantity converted by the conversion unit 2a by the generated attention map 180 and obtains a weighted sum, thereby extracting the feature quantity of an important region in the entirety of the image corresponding to the pair of the subject and the object. Since the weighted sum is obtained for the entirety of the image, the feature quantity used to obtain the weighted sum is a C-dimensional feature quantity for a single pair of the subject and the object.

The weighted sum of the attention map 180 and the image feature quantity converted by the conversion unit 2a will be described more specifically. It is assumed that the image feature quantity converted by the conversion unit 2a is a tensor of H × W × C. First, the relation feature extraction unit 44 multiplies the image feature quantity converted by the conversion unit 2a by the attention map 180. At this time, since the attention map 180 is H × W × 1, the channel is copied to the C dimension. The relation feature extraction unit 44 adds all the C-dimensional vectors of the pixels for the multiplication results. As a result, a single C-dimensional vector is generated. For example, the single C-dimensional vector is generated for the single attention map 180. Since as many attention maps 180 as the number of the pair feature quantities 182 are generated in fact, as many C-dimensional vectors to be created as the number of the pair feature quantities 182 are also generated. By the above-described processing, the relation feature extraction unit 44 obtains the weighted sum using the attention map 180 as the weight for the image feature quantity converted by the conversion unit 2a.

By the combining unit, the relation feature extraction unit 44 combines the feature quantity of the important region extracted by the attention map 180 and the pair feature quantity 182 generated by the pair feature quantity generation unit 43, and outputs the result as a relation feature quantity 183. For example, the relation feature extraction unit 44 may use the feature quantity obtained by coupling the feature quantity of the important region and the pair feature quantity 182 to each other in a dimensional direction. After coupling the feature quantity of the important region and the pair feature quantity 182, the relation feature extraction unit 44 may convert the coupled feature quantity by using the MLP or the like to adjust the number of dimensions.

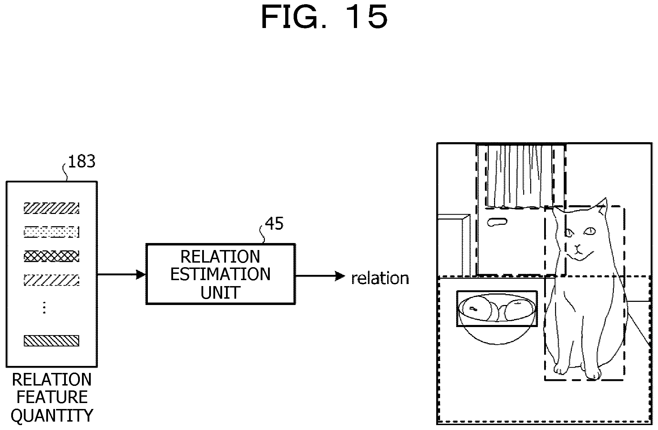

Next, estimation of the relation of each pair of a subject and an object executed by the relation estimation unit 45 will be described. FIG. 15 is a diagram illustrating an example of relation estimation according to the present embodiment. The relation estimation unit 45 receives the relation feature quantity 183 output by the relation feature extraction unit 44, and outputs a relation corresponding to each pair of the subject and the object. The relation estimation unit 45 may be configured by, for example, the MLP, batch normalization, or the like, which is an existing technique. The output relation is a probability value indicating that it is a relation to be estimated, which is determined in advance. For example, in a case where the relation to be estimated is {on, behind, hold} (above, behind, has), in the example of FIG. 15, a probability value for each relation such as (0.1, 0.9, 0.2) is output as the relation between the curtain and the cat. In this case, the specification unit 152 may specify "behind" (being behind) having the highest probability value as the relation between the curtain and the cat.

Each processing of estimating a relation between individual objects using the attention map 180 as described above is summarized as processing of specifying a relation between individual objects to be executed by the specification unit 152 using the third machine learning model (NN 40).

First, the specification unit 152 extracts, from video data, a first feature quantity corresponding to a first region including an object included in the video or a second region including a person included in the video. This video data may be a video obtained by capturing the inside of various facilities such as a factory with the camera 10, and the first region and the second region may be Bboxes. Such extraction processing corresponds to the processing of extracting the image feature quantity 181 from the image 170 by the image feature extraction unit 41 as described with reference to FIG. 11. For example, in the example illustrated in FIG. 11, the image 170 corresponds to the video data, and the image feature quantity 181 corresponds to the first feature quantity.

Next, the specification unit 152 detects an object and a person included in the video data from the extracted first feature quantity. Such detection processing of an object and a person corresponds to the processing of detecting Bboxes and classes of the object and the person from the image feature quantity 181 corresponding to the first feature quantity by the object detection unit 42 as described with reference to FIG. 12.

Next, the specification unit 152 generates a second feature quantity in which the plurality of detected objects, the plurality of detected persons, and the first feature quantity of the object or the person in at least one set of the object and the person are combined. Such generation processing corresponds to the processing of generating the pair feature quantity 182, in which the feature quantities of the detected object and person corresponding to the first feature quantities are arranged for each pair, by the pair feature quantity generation unit 43 as described with reference to FIG. 13. For example, in the example of FIG. 13, the pair feature quantity 182 corresponds to the second feature quantity.

Based on the first feature quantity and the second feature quantity, the specification unit 152 generates a first map indicating a plurality of objects, a plurality of persons, and a relation that identifies at least one interaction between the objects and the persons. Such generation processing corresponds to the processing of generating the attention map 180 based on the image feature quantity 181 corresponding to the first feature quantity and the pair feature quantity 182 corresponding to the second feature quantity by the relation feature extraction unit 44 as described with reference to FIG. 14. For example, in the example of FIG. 14, the attention map 180 corresponds to the first map.

Next, the specification unit 152 extracts a fourth feature quantity based on the first map and a third feature quantity obtained by converting the first feature quantity. Such extraction processing corresponds to the processing of extracting the relation feature quantity 183 based on the feature quantity converted by the conversion unit 2a and the attention map 180 corresponding to the first map by the relation feature extraction unit 44 as described with reference to FIG. 14. For example, in the example of FIG. 14, the feature quantity converted by the conversion unit 2a is a feature quantity obtained by converting the image feature quantity 181 corresponding to the first feature quantity by the conversion unit 2a, and corresponds to the third feature quantity, and the relation feature quantity 183 corresponds to the fourth feature quantity.

From the fourth feature quantity, the specification unit 152 specifies the relation that identifies the interaction between the object and the person. Such specification processing corresponds to the processing of estimating and specifying the relation between the object and the person from the relation feature quantity 183 corresponding to the fourth feature quantity by the relation estimation unit 45 as described with reference to FIG. 15.

For example, the specification unit 152 extracts a first feature quantity and a second feature quantity based on image frames constituting video data, and generates an attention map indicating a relation that identifies each of interactions between a plurality of persons and a plurality of objects based on the first feature quantity and the second feature quantity. Based on the attention map and a third feature quantity obtained by converting the first feature quantity, the specification unit 152 extracts a fourth feature quantity (relation feature quantity) and specifies a relation from the fourth feature quantity. By repeatedly executing the above-described processing, the specification unit 152 specifies the relation between the worker and the object at each time point, and registers information on the time point and the relation in the relation DB 145.

As described above, the processing in which the specification unit 152 specifies a relation that identifies an interaction between an object and a person by using a scene graph or an attention map has been described. By inputting the acquired video to the machine learning model for HOID in addition to the scene graph and the attention map, the specification unit 152 may specify a first region, a second region, and a relation that identifies an interaction between the object and the person. These first region and second region are regions in which the object and the person included in the video appear, respectively. The machine learning model (second machine learning model) for HOID is a model trained to identify information of a first class and a first region indicating an object, information of a second class and a second region indicating a person, and an interaction between the first class and the second class.

A case where the specification unit 152 specifies a relation between a person and an object by using HOID will be described.

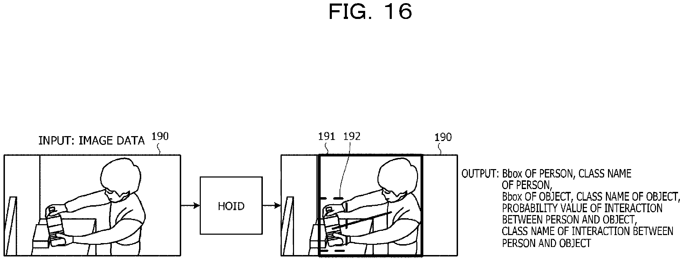

FIG. 16 is a diagram illustrating an example of relation specification by HOID according to the present embodiment. As illustrated in FIG. 16, the specification unit 152 inputs an image frame 190 of video data obtained by capturing the inside of various facilities such as a factory with the camera 10 to the machine learning model for HOID, and acquires an output result. As illustrated in FIG. 16, examples of this output result include a Bbox 191 of a person, a class name of the person, a Bbox 192 of an object, a class name of the object, a probability value of an interaction between the person and the object, and a class name of the interaction between the person and the object, and so on. The specification unit 152 specifies the Bbox 192 of the object and the Bbox 191 of the person as a first region and a second region where the object and the person included in the video data appear, respectively. For example, the specification unit 152 specifies, from the output result of the second machine learning model for HOID, the relation indicated by the class name of the interaction having the highest probability value of the interaction between the person and the object, as a relation that identifies the interaction between the object and the person.

For example, the specification unit 152 repeatedly executes the above-described processing on the image frames constituting the video data by using the HOID to specify the relation between the worker and the object at each time point, and registers information on the time point and the relation in the relation DB 145.

As described above, the specification unit 152 specifies the relation between the person (worker 2) and the object at each time point by using any one of the scene graph, the attention map, and the HOID, and registers the information on the time point and the relation in the relation DB 145. The administrator or the like sets in advance which of the scene graph, the attention map, and the HOID is to be used.

Although it has been described that the specification unit 152 registers the time point and the relation in the relation DB 145 in association with each other, the embodiment is not limited thereto. For example, the specification unit 152 may register the frame number of the image frame and the relation in the relation DB 145 in association with each other. As described above, the image frames in the period during which the same relation is continuously detected are classified into the same time point.

The specification unit 152 may execute the following processing. When a third time point occurs, the specification unit 152 extracts one image frame among the plurality of image frames corresponding to the third time point as a frame of interest. The specification unit 152 specifies interactions, between the object and the person, associated with identification information before and after identification information of the frame of interest, respectively. For example, the specification unit 152 specifies an interaction, between the object and the person, associated with the identification information of a frame before the frame of interest, and specifies an interaction, between the object and the person, associated with the identification information of a frame after the frame of interest. Here, the interaction associated with the identification information before the identification information of the frame of interest is a relation associated with the identification information of the image frame corresponding to the first time point, and corresponds to a first relation. The interaction associated with the identification information after identification information of the frame of interest is a relation associated with identification information of the image frame corresponding to the second time point, and corresponds to a second relation. By inputting the information on the first relation and the second relation to the first machine learning model, the specification unit 152 may specify the relation corresponding to the third time point.

The description returns to FIG. 3. Based on the relation (a series of actions) at each time point registered in the relation DB 145 and the action rule DB 144, the determination unit 153 determines whether a work content of the worker 2 is appropriate.

For example, it is assumed that the determination unit 153 determines that the action (relation) at each time point registered in the relation DB 145 is "action X1 --> action X2 --> action X3 --> action X4", and the action rule DB 144 includes an action procedure "action X1 → action X2 --> action X3 → action X4". In this case, since the action procedure that matches the specified action at each time point is included in the action rule DB, the determination unit 153 determines that the work content of the person included in the video data of the camera 10 is appropriate.

By contrast, it is assumed that the determination unit 153 determines that the action (relation) at each time point registered in the relation DB 145 is "action X1 --> action X2 --> action XE --> action X4", and the action rule DB 144 does not include the corresponding action procedure. In this case, since the action procedure that matches the specified action at each time point is not included in the action rule DB, the determination unit 153 determines that the work content of the person included in the video data of the camera 10 is not appropriate, and outputs an alert notification request to the notification unit 154. For example, in a case where the action (relation) at each time point registered in the relation DB 145 is not registered in the action rule DB 144, it means that the work content of the worker 2 includes an abnormal work.

By referring to the relation DB 145, the determination unit 153 determines whether a time point at which the relation is failed to be identified exists. For example, in the example illustrated in FIG. 6, the determination unit 153 determines that the relation has not been identified at the time point (2), and determines that the third time point has occurred. In this case, the third time point is the time point (2).

When the third time point occurs, the determination unit 153 acquires, from the relation DB 145, information on the first relation specified at a time point (hereafter, referred to as a first time point) immediately before the third time point and the second relation specified at a time point (hereafter, referred to as a second time point) immediately after the third time point. In the example illustrated in FIG. 6, the first relation is "action X1", and the second relation is "action X3".

By inputting the first relation and the second relation to the first machine learning model, the determination unit 153 specifies a relation at the third time point. The determination unit 153 registers a relationship between the third time point and the specified relation in the relation DB 145. After the relation at the third time point is specified, the determination unit 153 performs the above-described determination and determines that the work content of the person is appropriate.

By executing a simulation using a digital twin, the determination unit 153 may determine whether the work content of the person is appropriate. For example, the determination unit 153 reproduces the action of the worker 2 existing in a physical space of a real world in a virtual space in the digital twin, and feeds back whether a work process of the worker 2 is appropriate by using the reproduced result. When the action (relation) at each time point registered in the relation DB 145 is "action X1 --> action X2 --+ action X3 --+ action X4", the determination unit 153 reproduces "action X1 → action X2 → action X3 --> action X4" in the virtual space and executes a simulation, thereby determining that the work content of the person included in the video data of the camera 10 is appropriate.

Upon receiving the alert notification request from the determination unit 153, the notification unit 154 outputs and displays information indicating that there is an error in the work content to the terminal apparatus 15.

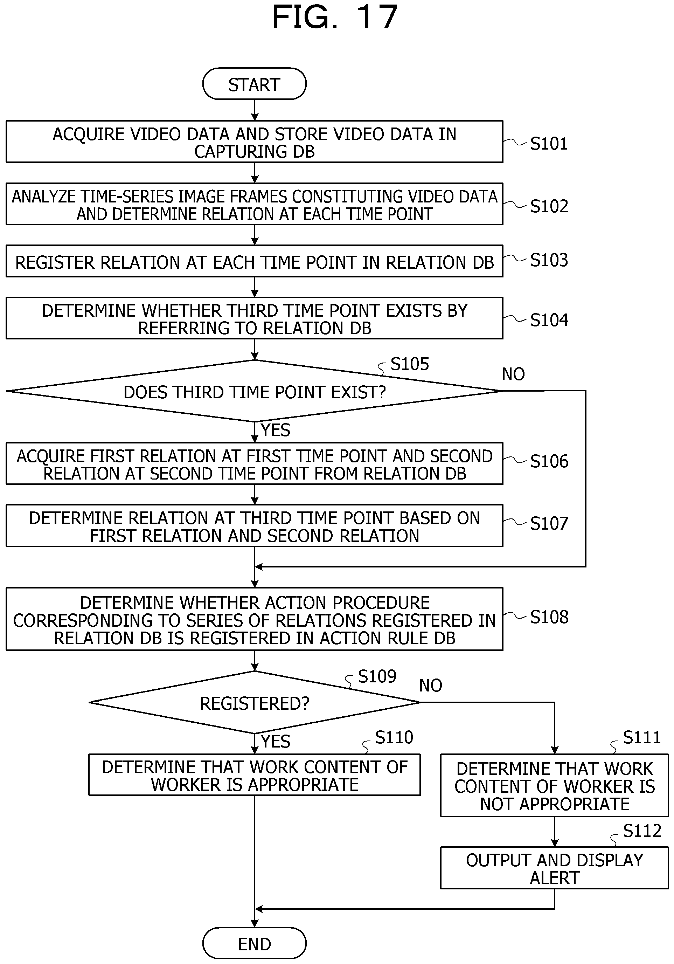

Next, an example of a processing procedure of the information processing apparatus 100 according to the present embodiment will be described. FIG. 17 is a flowchart illustrating a processing procedure of the information processing apparatus according to the present embodiment. As illustrated in FIG. 17, the acquisition unit 151 of the information processing apparatus 100 acquires video data from the camera 10 and stores the acquired data in the capturing DB 141 (step S101).

The specification unit 152 of the information processing apparatus 100 analyzes time-series image frames constituting the video data and specifies a relation at each time point (step S102). The specification unit 152 registers the relation at each time point in the relation DB 145 (step S103).

By referring to the relation DB 145, the determination unit 153 determines whether the third time point at which the relation is failed to be specified exists (step S104). In a case where the third time point does not exist (No in step S105), the determination unit 153 causes the processing to proceed to step S108.

On the other hand, in a case where the third time point exists (Yes in step S105), the determination unit 153 acquires the first relation at the first time point and the second relation at the second time point from the relation DB 145 (step S106). Based on the first relation and the second relation, the determination unit 153 specifies the relation at the third time point (step S107).

The determination unit 153 determines whether an action procedure corresponding to a series of relations registered in the relation DB 145 is registered in the action rule DB 144 (step S108). In a case where it is registered (Yes in step S109), the determination unit 153 determines that the work content of the worker 2 is appropriate (step S110).

On the other hand, in a case where it is not registered (No in step S109), the determination unit 153 determines that the work content of the worker 2 is not appropriate (step S111). The notification unit 154 of the information processing apparatus 100 outputs and displays an alert on the terminal apparatus 15 (step S112). For example, the notification unit 154 transmits a signal to the terminal apparatus 15, to cause the terminal apparatus 15 to display the alert indicating that the work content of the worker 2 is not appropriate, in a manner that the alert is viewable by the user of the terminal device.

Next, effects of the information processing apparatus 100 according to the present embodiment will be described. When the third time point at which the relation is failed to be specified occurs, the information processing apparatus 100 acquires information on the first relation at the first time point and the second relation at the second time point from the storage unit 140. Based on the first relation and the second relation, the information processing apparatus 100 specifies the relation at the third time point. Accordingly, the information processing apparatus 100 may compensate for the relation at the third time point, and may determine whether a work content of the worker 2 is appropriate.

The information processing apparatus 100 compares a series of relations (actions) registered in the relation DB 145 with the action procedure registered in the action rule DB 144. When the action procedure corresponding to the series of relations (actions) is not registered in the action rule DB 144, the information processing apparatus 100 determines that the work content of the worker 2 includes an abnormal work, and outputs and displays an alert on the terminal apparatus 15. Accordingly, it is possible to notify the worker 2 that the work content includes an abnormal work.

By inputting each image frame of the video data to the second machine learning model, the information processing apparatus 100 detects objects including a person, estimates a relation between the objects, and generates a scene graph. Such a scene graph includes, for each person, information on a first region of the person, a second region of the object, and a relation between the first region and the second region. The information processing apparatus 100 analyzes the scene graph, specifies a relation at each time point, and registers information on the time point and the relation in the relation DB 145. Accordingly, it is possible to specify a relation for each image frame.

The information processing apparatus 100 extracts a first feature quantity and a second feature quantity based on image frames constituting video data, and generates an attention map indicating a relation that identifies each of interactions between a plurality of persons and a plurality of objects based on the first feature quantity and the second feature quantity. Based on the attention map and a third feature quantity obtained by converting the first feature quantity, the information processing apparatus 100 extracts a fourth feature quantity (relation feature quantity) and specifies a relation from the fourth feature quantity. Accordingly, it is possible to specify the relation between the person and the object more accurately than the scene graph.

The processing of the information processing apparatus 100 described in the present embodiment is an example, and the information processing apparatus 100 may execute other processing to identify the interaction between the object and the person. For example, the information processing apparatus 100 may specify a relation (interaction) of a person with respect to an object based on skeleton information of the person. An example of processing of the information processing apparatus 100 is described below.

By using the second machine learning model or the like, the information processing apparatus 100 extracts images (time-series images) in a region of a person from time-series image frames of video data. The information processing apparatus 100 generates time-series skeleton information by inputting the time-series images to a trained fourth machine learning model, and specifies the action of the person on the object (interaction between the object and the person) based on the skeleton information. The fourth machine learning model is an NN that uses an image of a person as input and skeleton information of the person as output.

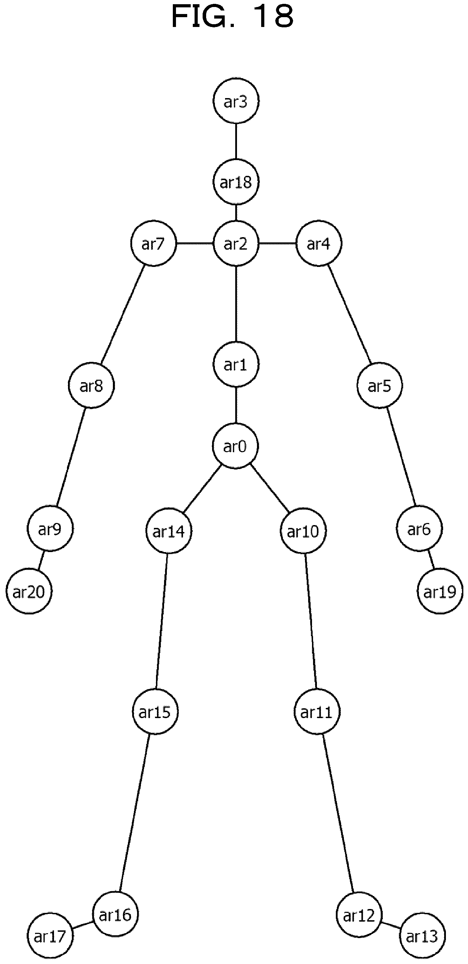

The skeleton information is data in which two dimensional or three dimensional coordinates are set for a plurality of joints defined by a skeleton model of a human body. It is assumed that the coordinates of each joint in the skeleton data are set as two dimensional coordinates. FIG. 18 is a diagram illustrating an example of a skeleton model of a human body. For example, as illustrated in FIG. 18, a skeleton model of a human body is defined by 21 joints ar0 to ar20.

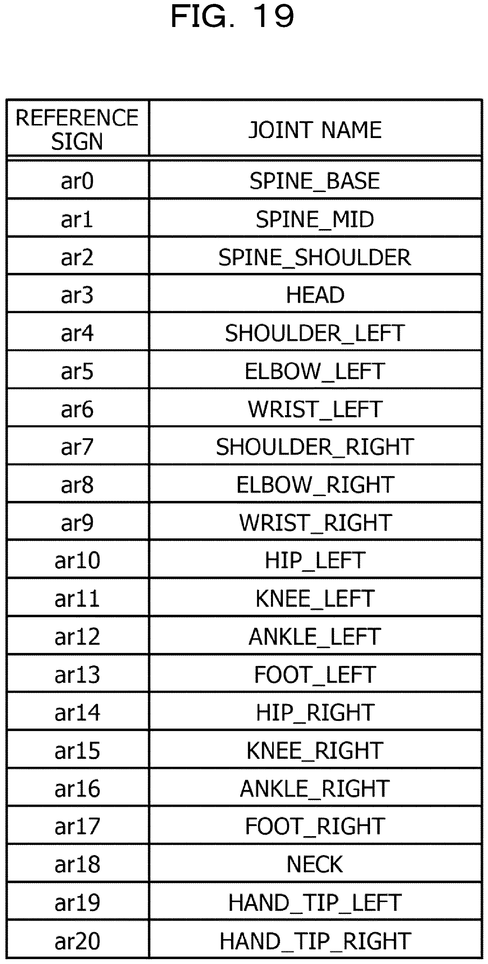

Relationships between the joints ar0 to ar20 illustrated in FIG. 18 and joint names are illustrated in FIG. 19. FIG. 19 is a diagram illustrating examples of the joint names. For example, the joint name of the joint ar0 is "SPINE_BASE". The joint names of the joints ar1 to a20 are as illustrated in FIG. 19, and description thereof will be omitted.

Based on the generated time-series skeleton information and a rule table, the information processing apparatus 100 specifies an action of a person. For example, the rule table is a table in which a relationship between a change in position of a predetermined joint in skeleton information and a type of an action of a person is defined. The predetermined joint is set in advance.

As described above, even when the time-series skeleton information is used, the information processing apparatus 100 may specify the action of the person on the object (interaction between the object and the person).

By analyzing the video data, the information processing apparatus 100 may skip the processing of specifying the relation between the person and the object in a state where the person turns his/her back or in a period during which the presence of a shielding object is detected. By executing such processing, a processing load of the information processing apparatus 100 may be reduced.

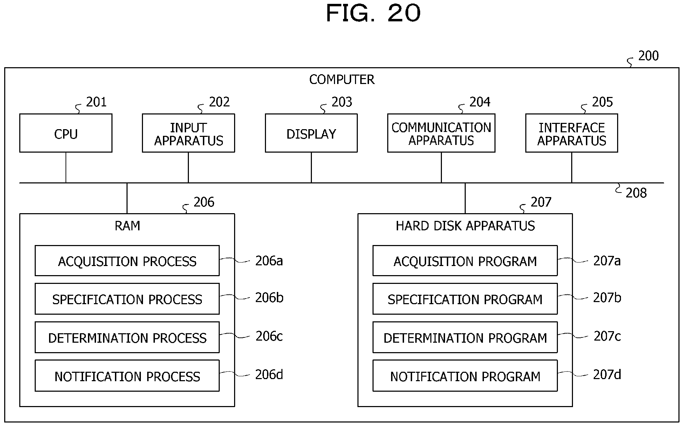

Next, an example of a hardware configuration of a computer that realizes the functions similar to those of the above-described information processing apparatus 100 will be described. FIG. 20 is a diagram illustrating an example of the hardware configuration of the computer that realizes the functions similar to those of the information processing apparatus according to the embodiment.

As illustrated in FIG. 20, a computer 200 includes a central processing unit (CPU) 201 that executes various types of computation processing, an input apparatus 202 that accepts input of data from a user, and a display 203. The computer 200 includes a communication apparatus 204 that exchanges data with an external apparatus or the like via a wired or wireless network, and an interface apparatus 205. The computer 200 also includes a random-access memory (RAM) 206 that temporarily stores various types of information, and a hard disk apparatus 207. Each of the apparatuses 201 to 207 is coupled to a bus 208.

The hard disk apparatus 207 includes an acquisition program 207a, a specification program 207b, a determination program 207c, and a notification program 207d. The CPU 201 reads each of the programs 207a to 207d and loads the programs 207a to 207d to the RAM 206.

The acquisition program 207a functions as an acquisition process 206a. The specification program 207b functions as a specification process 206b. The determination program 207c functions as a determination process 206c. The notification program 207d functions as a notification process 206d.

The processing of the acquisition process 206a corresponds to the processing of the acquisition unit 151. The processing of the specification process 206b corresponds to the processing of the specification unit 152. The processing of the determination process 206c corresponds to the processing of the determination unit 153. The processing of the notification process 206d corresponds to the processing of the notification unit 154.

Each of the programs 207a to 207d does not necessarily have to be initially stored in the hard disk apparatus 207. For example, each program is stored in a "portable physical medium" such as a flexible disk (FD), a compact disk read-only memory (CD-ROM), a Digital Versatile Disc (DVD), a magnetooptical disk, or an integrated circuit (IC) card, that is inserted in the computer 200. The computer 200 may read and execute each of the programs 207a to 207d.

The following appendices are further disclosed in relation to the embodiment including the exemplary embodiment described above.

## Claims

1. An information processing program comprising instructions which, when executed by a computer to execute processing comprising:
acquiring a video data obtained by causing a camera to capture a video at a site in which a person and an object exist, the video data including a plurality of frames each of which is associated with a corresponding time point and includes the video captured at the corresponding time point;
identifying a first relation by analyzing a first frame that is any of the plurality of frames included in the acquired video data and that is associated with a first time point, the first relation being a relation identifying an interaction between the object and the person included in the first frame;
identifying a second relation by analyzing a second frame that is any of the plurality of frames included in the acquired video data and that is associated with a second time point, the second relation being a relation identifying an interaction between the object and the person included in the second frame; and
specifying, based on the first relation and the second relation, an action of the person on the object in a third frame, the third frame being a frame that is any of the plurality of frames and that is associated with a third time point between the first time point and the second time point.

2. The information processing program according to claim 1, wherein the third frame associated with the third time point is a frame in which an action of the person on the object is failed to be identified because the person turns his/her back with respect to the camera that captures the video, or a frame in which an action of the person on the object is failed to be identified because there is a shielding object between the person and the camera.

3. The information processing program according to claim 1, the processing further comprising
performing, for each frame of the plurality of frames, processing including:
identifying, by analyzing the each frame, an interaction between the object and the person included in the each frame, and
storing the identified interaction in a storage unit in association with identification information of the each frame;
specifying, from among the plurality of frames, the third frame being a frame of interest that is a frame in which the interaction between the object and the person is failed to be identified;
in a case where the third frame is specified from among the plurality of frames, specifying a first interaction associated with the identification information of a frame before the third frame, and a second interaction associated with the identification information of a frame after the third frame; and
specifying an action of the person on the object in the third frame based on the specified first and second interactions.

4. The information processing program according to claim 1, the processing further comprising:
comparing a work rule in which a plurality of action procedures are associated, with a series of actions of the person on the object;
determining that an abnormal work is included in the series of actions when the rule and the series of actions do not match; and
causing an alert that indicates that there is abnormality in the work to be displayed on a terminal used by the person.

5. The information processing program according to claim 1, the processing further comprising:
generating a scene graph in which a first region, a second region, and a relation are specified for each person included in the video by inputting the acquired video to a machine learning model, wherein
the specifying of the action of the person on the object includes
specifying a first person who transitions from the first relation to the second relation with respect to the object from among a plurality of the persons included in the video by analyzing the scene graph, and
specifying an action of the person on the object for each frame that constitutes the video.

6. The information processing program according to claim 1, the processing further comprising:
extracting a first feature quantity that corresponds to a first region or a second region from the video;
detecting the object and the person included in the video from the extracted first feature quantity;
generating a second feature quantity in which a plurality of the detected objects, a plurality of the detected persons, and the first feature quantity of the object or the person in at least one set of the object and the person are combined;
generating, based on the first feature quantity and the second feature quantity, a first map that indicates the plurality of objects, the plurality of persons, and a relation that identifies at least one interaction between the objects and the persons;
extracting a fourth feature quantity based on the first map and a third feature quantity obtained by converting the first feature quantity; and
specifying the relation from the fourth feature quantity.

7. The information processing program according to claim 1, the processing further comprising:
generating skeleton information of the person by analyzing the acquired video; and
identifying an interaction between the object and the person included in the captured video based on the generated skeleton information.

8. The information processing program according to claim 1, wherein whether a work content of the person is appropriate is determined by executing a simulation using a digital twin.

9. An information processing method implemented by a computer, the information processing method comprising:
acquiring a video data obtained by causing a camera to capture a video at a site in which a person and an object exist, the video data including a plurality of frames each of which is associated with a corresponding time point and includes the video captured at the corresponding time point;
identifying a first relation by analyzing a first frame that is any of the plurality of frames included in the acquired video data and that is associated with a first time point, the first relation being a relation identifying an interaction between the object and the person included in the first frame;
identifying a second relation by analyzing a second frame that is any of the plurality of frames included in the acquired video data and that is associated with a second time point, the second relation being a relation identifying an interaction between the object and the person included in the second frame; and
specifying, based on the first relation and the second relation, an action of the person on the object in a third frame, the third frame being a frame that is any of the plurality of frames and that is associated with a third time point between the first time point and the second time point.

10. An information processing apparatus comprising a control unit configured to perform processing comprising:
acquiring a video data obtained by causing a camera to capture a video at a site in which a person and an object exist, the video data including a plurality of frames each of which is associated with a corresponding time point and includes the video captured at the corresponding time point;
identifying a first relation by analyzing a first frame that is any of the plurality of frames included in the acquired video data and that is associated with a first time point, the first relation being a relation identifying an interaction between the object and the person included in the first frame;
identifying a second relation by analyzing a second frame that is any of the plurality of frames included in the acquired video data and that is associated with a second time point, the second relation being a relation identifying an interaction between the object and the person included in the second frame; and
specifying, based on the first relation and the second relation, an action of the person on the object in a third frame, the third frame being a frame that is any of the plurality of frames and that is associated with a third time point between the first time point and the second time point.
